# EUROPÄISCHE PATENTSCHRIFT

(11) **EP 2 175 012 B1**
(45) Veröffentlichungstag und Bekanntmachung des Hinweises auf die Patenterteilung: **23.01.2013**
(21) Anmeldenummer: 09010759.0
(22) Anmeldetag: 21.08.2009
(51) Int. Cl.: C11C 1/08, C11C 3/00

(54) **Verfahren und Anlage zur Herstellung von Biodiesel**
Method and device for manufacturing biodiesel
Procédé et installation destinés à la fabrication de biodiesel

(30) Priorität: 10.10.2008 DE 102008050935
(43) Veröffentlichungstag der Anmeldung: 14.04.2010
(73) Patentinhaber: Lurgi GmbH, 60439 Frankfurt am Main (DE)
(72) Erfinder: Bönsch, Rudolf, Dr., 55299 Nackenheim (DE); Seidel, Eckhard, Dr., 60389 Frankfurt (DE); Saft, Helmut, 61194 Niddatal (DE)

(56) Entgegenhaltungen:
- WO-A1-03/022064
- WO-A2-2007/076163
- WO-A2-2008/130974
- VERLEYEN, T., SOSINKA, U., IOANNIDOU, S., VERHE, R., DEWETTINCK, K., HUYGHEBAERT, A., AND DE GREYT, W.: "Influence of the vegetable oil refining process on free and esterified sterols" JOURNAL OF THE AMERICAN OIL CHEMISTS' SOCIETY., Bd. 79, Nr. 1, 2002, Seiten 947-953, XP2564089 USAMERICAN OIL CHEMISTS' SOCIETY. CHAMPAIGN. ISSN: 0003-021X
- MOREAU, R.A., SCOTT, K.M., AND HAAS, M.J.: "the identification and quantification of steryl glucosides in precipitates from commercial biodiesel" JOURNAL OF THE AMERICAN OIL CHEMISTS' SOCIETY., Bd. 85, Nr. 3, 3. Juli 2008 (2008-07-03), Seiten 761-770, XP2564090 USAMERICAN OIL CHEMISTS' SOCIETY. CHAMPAIGN. ISSN: 0003-021X

## Beschreibung

Die Erfindung betrifft ein Verfahren zur Herstellung von Biodiesel aus Sterylglycoside enthaltenden Fetten, Ölen oder Spaltfettsäuren sowie eine Anlage zur Durchführung dieses Verfahrens.

Biodiesel wird aus tierischen oder pflanzlichen Fetten, Ölen oder Spaltfettsäuren hergestellt. Der gegenwärtig bevorzugte Rohstoff für die Biodieselproduktion in Europa ist Rapsöl. So beschreibt die Europäische Patentschrift EP 0523767 B1 ein Verfahren zum Erzeugen von Fettsäure-Methylester oder Fettsäure-Ethylester und Glycerin durch Umesterung von Ölen oder Fetten, wobei hier von Rapsöl ausgegangen wird. Hierbei wird das Öl oder Fett nach optionaler Vorbehandlung mit Methanol oder Ethanol und einem alkalischen Katalysator in flüssiger Phase zu den Produkten Fettsäure-Methylester oder Fettsäure-Ethylester und Glycerin als Nebenprodukt umgesetzt. Man arbeitet dabei vorteilhaft mit mindestens zwei Umsetzungsstufen, wobei jede Umsetzungsstufe einen Mischreaktor und einen Abscheider zur Abtrennung einer leichten, an Fettsäurealkylester reichen Phase und einer schweren, glycerinreichen Phase aufweist. Die leichte, an Fettsäurealkylester reiche Phase führt man einer weiteren Aufarbeitung zu, die unter anderem die Wäsche mit Wasser in einer Waschkolonne beinhaltet.

In Nordamerika werden für die Biodieselproduktion auch größere Mengen an Sojaöl verwandt. In Asien kommt ferner Palmöl oder Palmolein als Ausgangsstoff für die Herstellung von Biodiesel zum Einsatz. Alle Pflanzenöle enthalten signifikante Konzentrationen an Sterylglycosiden in gelöster Form. Es handelt sich dabei um verbreitete pflanzliche Inhaltsstoffe, die chemisch gesehen aus der Verbindung eines Kohlenhydrats (z. B. Glucose) mit einem Phytosterin resultieren und auch als Steroline bekannt sind. Phytosterine sind pflanzliche Hormone und stellen Bestandteile von pflanzlichen Zellmembranen dar; bekannte Vertreter sind z. B. Stigmasterol oder Campesterol.

Die Konzentration an Sterylglycosiden kann in den Pflanzenölen je nach Art, Herkunft und Vorbehandlung stark variieren. Beispielhaft kann Roh-Sojaöl bis zu 2300 ppm und Palmöl bis zu 3000 ppm an Sterylglycosiden enthalten, wohingegen eine an Sterylglycosiden ärmere Ölsorte wie Sonnenblumenöl nur ca. 300 ppm enthält. Rapsöl enthält typischerweise bis zu 500 ppm an Sterylglycosiden, der Gehalt ist aber stark von der Vorbehandlung des Öls abhängig.

Die Sterylglycoside können auch einen Fettsäurerest tragen, der durch Veresterung an eine Hydroxylgruppe des Kohlenhydrats gebunden ist; man spricht dann von acylierten Sterylglycosiden. Diese werden bei der Herstellung von Biodiesel teilweise zu nicht acylierten Sterylglycosiden umgesetzt, wodurch sich ihre Löslichkeit in organischen Lösungsmitteln verringert.

Es ist bekannt, dass die Verwendung von an Sterylglycosiden reichen Ölsorten bei der Biodieselherstellung zur Bildung von Trübungen oder Niederschlägen bei der nachfolgenden Lagerung des Produktes bei kalten Umgebungstemperaturen führen kann. Da Sterylglycoside in einer konventionellen Waschkolonne, wie sie beispielsweise bei der Herstellung von Biodiesel aus Rapsöl Verwendung findet, aufgrund ihrer geringen Wasserlöslichkeit nicht entfernbar sind, kann es in dort zu Verstopfungen infolge der Bildung von Sterylglycosid-reicher Niederschläge kommen. In nachfolgenden Prozessschritten können die Sterylglycoside zu Ablagerungen in den Wärmetauschern der Trockner führen sowie Filter verstopfen. Der produzierte Biodiesel ist nicht spezifikationsgerecht, da der spezifizierte Wert für die Gesamtverschmutzung nicht eingehalten wird. Bei der Verarbeitung solcher Öle ist daher ein erhöhter Wartungsaufwand für die Produktionsanlage erforderlich. Ferner ist - bedingt durch die notwendige Außerbetriebnahme der Produktionsanlage oder ihrer Teile zwecks Wartung - die Verfügbarkeit und somit die Produktivität der Produktionsanlage eingeschränkt. Die Ausfällungen können durch mechanische Verfahren wie Filtration oder Zentrifugation, ggf. auch in Kombination, abgetrennt werden.

In der Patentschrift WO 2007/076163 A2 wird daher die Zugabe eines Adsorbens oder Filtrationshilfsmittels zur Abtrennung von Sterylglycosiden aus Biodiesel und dessen nachfolgende Entfernung mittels Filtration, Zentrifugation oder Kombinationen davon vorgeschlagen und beansprucht. Nachteilig ist dabei, dass diese Behandlung in einfacher Weise nur für das fertig gestellte Biodieselprodukt möglich ist. Weiterhin nachteilig ist die Verwendung großer Mengen an festen Filtrations- bzw. Adsorptionshilfsmitteln, und der daraus resultierende Anfall großer Mengen an festen Abfällen. Als weitere Option wird in der Patentschrift die destillative Reinigung von Biodiesel genannt, da die Sterylglycoside einen erheblich höheren Siedepunkt aufweisen als Fettsäurealkylester. Diese Option ist aber mit höherem apparativen und sehr hohem energetischen Aufwand behaftet, da der gesamte Fettsäurealkylester als Leichtsieder abdestilliert werden muss.

Aufgabe der Erfindung ist es daher, die oben genannten Nachteile zu vermeiden und ein wirtschaftlicheres sowie technisch einfacher durchführbares Verfahren zur Herstellung von Biodiesel bei Verwendung von an Sterylglycosiden reichen Fetten, Ölen oder Spaltfettsäuren bereitzustellen, das sich insbesondere durch die Vermeidung des Einsatzes prozessfremder Hilfsstoffe oder energieintensiver Trennoperationen sowie durch apparative Einfachheit auszeichnet.

Diese Aufgabe wird mit der Erfindung im Wesentlichen dadurch gelöst, dass man aus der Umesterung von Fetten, Ölen oder der Veresterung von Spaltfettsäuren, die Sterylglycoside enthalten, mit kurzkettigen Alkanolen in Gegenwart eines Katalysators und nachfolgender Flüssig-Flüssig-Phasentrennung einen ersten, an Fettsäurealkylester reichen Produktstrom gewinnt, den man nachfolgend in einer Waschvorrichtung mit Wasser wäscht. Gemäß einer bevorzugten Ausgestaltung der Erfindung führt man die Wasserwäsche im Gegenstrom in einer mit strukturierten Packungen oder Füllkörpern ausgestatteten Waschkolonne durch. Dabei bildet sich an der Phasengrenzschicht zwischen der schweren, wasserreichen Phase und der leichten, an Fettsäurealkylester reichen Phase eine Suspensionsschicht aus, die grossvolumige Agglomerate aus Sterylglycosiden, Fettsäurealkylester und Wasser enthält, wobei diese Agglomerate das 10-bis 70-fache an Wasser und das 30- bis 90-fache an Fettsäurealkylester, jeweils gerechnet in Gewichtsanteilen, enthalten können. Überraschenderweise wurde gefunden, dass die Abtrennung von Sterylglycosiden verbessert werden kann, wenn man nicht, wie es naheläge, die Suspensionsschicht am Ort ihres Entstehens aus der Waschkolonne über einen Seitenstrom abzieht und verwirft. Auf diese Weise würde nur ein Teil der Sterylglycoside entfernt, und es träten Verluste an Fettsäurealkylester auf. Vielmehr behandelt man die Suspensionsschicht erfindungsgemäß durch Einbringen kinetischer Energie, in einer bevorzugten Ausgestaltung der Erfindung durch Rühren. Alternativ kann die kinetische Energie aber auch durch Strahlmischen oder den Einsatz einer Ultraschallquelle eingebracht werden. Hierdurch erreicht man eine Verwirbelung der Suspensionsschicht und eine Verkleinerung der Agglomerate unter Abgabe von Wasser in die schwere Phase und Abgabe von Fettsäurealkylester in die leichte Phase. Aus der Suspensionsschicht gehen Sterylglycoside in homogen gelöster Form, in kolloidal gelöster Form oder in Form feindisperser Sterylglycosid/Fettsäurealkylester/Wasser-Agglomerate in die leichte Phase über. Die Behandlung der Suspensionsschicht durch Einbringen kinetischer Energie kann alternativ auch in einem externen Behälter erfolgen.

Aus der auf diese Weise an Sterylglycosiden angereicherten, leichten Phase zieht man einen zweiten Produktstrom ab und führt diesen in mindestens eine weitere Behandlungsstufe, in der er intensiv mit Wasser vermischt wird, wodurch nach Flüssig-Flüssig-Phasentrennung ein dritter Produktstrom als leichte Phase erhalten wird, der Sterylglycosid/Fettsäurealkylester/Wasser-Agglomerate enthält, die mittels mechanischer Trennverfahren abscheidbar sind. Gemäß einer bevorzugten Ausgestaltung der Erfindung werden die Agglomerate mittels Zentrifugation abgetrennt. Der aus dem mechanischen Trennverfahren nach Phasentrennung als leichte Phase erhaltene, vierte Produktstrom ist weitgehend frei von Sterylglycosiden und enthält überwiegend Fettsäurealkylester. Er wird nachfolgend einer Produktkonditionierung zugeführt, die bevorzugt die Trocknung oder die Filtration oder beides umfasst. Hierdurch wird spezifikationsgerechter Biodiesel erhalten.

Aus dem mechanischen Trennverfahren wird als schwere Phase ein fünfter, an Sterylglycosiden reicher Produktstrom erhalten. In Weiterbildung der Erfindung wird er zu einem Sterylglycoside enthaltenden Dickschlamm weiterverarbeitet, der der Entsorgung oder weiteren Verwendung zugeführt wird. Sterylglycoside werden unter anderem bei der Herstellung pharmazeutischer Zubereitungen eingesetzt.

Gemäß einer bevorzugten Ausgestaltung der Erfindung werden bei der Umesterung der der Fette oder Öle oder der Veresterung der Spaltfettsäuren als Alkanole Methanol oder Ethanol oder beides verwendet, wodurch Fettsäuremethylester oder Fettsäureethylester erhalten werden.

Die Erfindung betrifft auch eine Anlage zur Herstellung von Biodiesel aus Sterylglycoside enthaltenden Fetten, Ölen oder Spaltfettsäuren, die zur Durchführung des oben beschriebenen Verfahrens geeignet ist. Die Anlage umfasst
- mindestens eine Reaktionsstufe, in der Sterylglycoside enthaltende Fette oder Öle oder Spaltfettsäuren mit kurzkettigen Alkanolen in Gegenwart eines Katalysators durch Umesterung oder Veresterung zu Fettsäurealkylester umgesetzt werden und man nach Flüssig-Flüssig-Phasentrennung einen an Fettsäurealkylester reichen, ersten Produktstrom als leichte Phase gewinnt,
- eine Waschkolonne, der man den ersten Produktstrom zuführt und in der er mit Wasser gewaschen wird, wobei man einen zweiten Produktstrom als leichte Phase erhält,
- mindestens einen Mischer, dem man den zweiten Produktstrom zuführt und ihn dort intensiv mit Wasser vermischt, wobei man nach Flüssig-Flüssig-Phasentrennung einen dritten Produktstrom als leichte Phase erhält,
- eine mechanische Trennvorrichtung, der der dritte Produktstrom zugeführt wird und aus der man nach Phasentrennung einen vierten Produktstrom als leichte Phase erhält, der einer Produktkonditionierung zugeführt wird, wobei spezifikationsgemäßer Biodiesel erhalten wird, und aus der man einen fünften, an Steryglycosiden angereicherten Produktstrom als schwere Phase erhält, der abgezogen wird und nach weiterer Aufarbeitung der Entsorgung oder weiteren Verwendung zugeführt wird.

In einer bevorzugten Ausführungsform der Anlage ist der Betrieb der Waschkolonne im Gegenstrom und ihre Ausrüstung mit strukturierten Packungen oder Füllkörpern als Trennelemente vorgesehen.

In einer weiteren bevorzugten Ausführungsform der Anlage ist die Ausführung der mechanischen Trennvorrichtung als Zentrifuge vorgesehen.

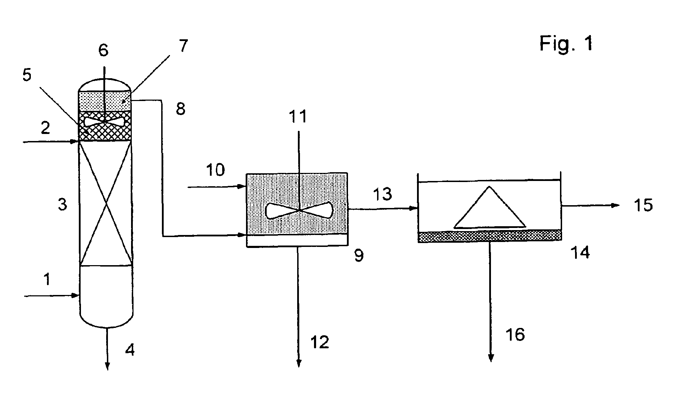

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigt die einzige Figur schematisch eine Anlage zur Herstellung von Biodiesel aus Sterylglycoside enthaltenden Fetten, Ölen oder Spaltfettsäuren gemäß einer bevorzugten Ausführungsform der Erfindung.

In einem in der Figur nicht gezeigten, an sich bekannten Reaktionsteil werden Sterylglycoside enthaltende Fette, Öle oder Spaltfettsäuren mit kurzkettigen Alkanolen, bevorzugt Methanol, in Gegenwart eines basischen Katalysators durch Umesterung oder Veresterung zu Fettsäurealkylester umgesetzt, wobei durch nachfolgende Flüssig-Flüssig-Phasentrennung ein erster, an Fettsäurealkylestern reicher Produktstrom als leichte Phase gewonnen wird. Dieser erste Produktstrom enthält weitgehend vollständig die im Fett, Öl oder in der Spaltfettsäure enthaltenen Sterylglycoside.

Über die Leitung (1) wird der erste Produktstrom zur Waschkolonne (3) geführt und dieser im unteren Bereich aufgegeben. Die Waschkolonne ist mit geeigneten Füllkörpern als Trennelemente ausgestattet. Die Eintrittstemperatur des ersten Produktstromes beträgt zwischen 20 und 60°C. Auf die Waschkolonne wird Wasser als Waschmittel über eine Wasserleitung (2) mit einer Temperatur von 10 bis 40°C oberhalb der Füllkörperschicht aufgegeben und über die Leitung (4) unterhalb des Zugabeniveaus des Leitung (1) abgezogen.

Während des Waschvorganges kommt es zur Ausbildung von Sterylglycosid/Fettsäurealkylester/Wasser-Agglomeraten, die sich an der Phasengrenzschicht zwischen der schweren, wasserreichen Phase und der leichten, an Fettsäurealkylester reichen Phase als Suspensionsschicht (5) sammeln. Die Wassersäule in der Waschkolonne und die Position des Wasserzulaufs werden vorteilhaft so gewählt, dass die Suspensionsschicht oberhalb der Füllkörperschicht und oberhalb des Zugabeniveaus der Wasserleitung (2) liegt. Die in der Suspensionsschicht enthaltenen Agglomerate sind grobdispers und enthalten größere Mengen an eingeschlossenem Wasser und Fettsäurealkylester. Je mehr die Suspensionsschicht anwächst, desto kompakter wird sie und desto mehr behindert sie das weitere Aufsteigen von Fettsäurealkylester aus der Kolonne in die obere Phase. Daher wird die Suspensionsschicht erfindungsgemäß mit einem Rührer (6) gerührt, der vorteilhaft als Propellerrührer oder Blattrührer oder Kombinationen davon ausgeführt ist. Durch den Rührvorgang werden aus den grobdispersen Agglomeraten Wasser und Fettsäurealkylester freigesetzt und es gehen Sterylglycoside in homogen gelöster Form, in kolloidal gelöster Form oder in Form feindisperser Sterylglycosid/Fettsäurealkylester/- Wasser-Agglomerate in die leichte Phase (7) über. Diese wird über Leitung (8) als zweiter Produktstrom abgezogen und dem Mischer (9) zugeführt. Der zweite Produktstrom wird im Mischer mit einer definierten Wassermenge von 0,2 bis 4 Gew.-% versetzt, das über eine Wasserleitung (10) zugeführt wird.

Im Mischer (9) erfolgt eine intensive Durchmischung der beiden Phasen mit einem Intensivrührer (11). Dadurch werden in der Fettsäurealkylester-reichen Phase noch homogen oder kolloidal gelöste Sterylglycoside in kompakte Sterylglycosid/Fettsäurealkylester/Wasser-Agglomerate überführt, die aufgrund ihrer höheren Dichte mittels eines mechanischen Trennverfahrens leicht abtrennbar sind, aber im Mischer aufgrund der Verwirbelung dispergiert bleiben. Man gewinnt einen dritten, an Fettsäurealkylester reichen Produktstrom als leichte Phase einer Flüssig-Flüssig-Phasentrennung, die ist in der Figur nur angedeutet und nicht im Detail gezeigt ist. Die leichte Phase führt dabei die dispergierten Agglomerate mit sich. Abwasser wird als schwere Phase über Leitung (12) abgezogen.

Den dritten Produktstrom, der die kompakten Sterylglycosid/Fettsäurealkylester/Wasser-Agglomerate enthält, führt man über eine Leitung (13) zu einer Zentrifuge (14). Hier erfolgt die Trennung aufgrund der Dichteunterschiede zwischen den kompakten Sterylglycosid/Fettsäurealkylester/Wasser-Agglomeraten und der an Fettsäurealkylester reichen, leichten Phase. Aus der Zentrifuge zieht man als leichte Phase einen vierten Produktstrom über Leitung (15) ab, der weitgehend von Sterylglycosiden befreit ist und der weiteren, die Trocknung und/oder die Filtration beinhaltenden Aufarbeitung zu, aus der spezifikationsgerechter Biodiesel gewonnen wird. Ferner gewinnt man über Leitung (16) als schwere Phase der Zentrifugation einen an Sterylglycosiden reichen, fünften Produktstrom, der vorteilhaft weiter eingedickt und als Dickschlamm der Entsorgung oder der weiteren Verwendung zugeführt wird.

Mit der Erfindung wird somit ein wirtschaftliches Verfahren zur Herstellung von Biodiesel aus Sterylglycoside enthaltenden Fetten, Ölen oder Spaltfettsäuren vorgeschlagen. Im Gegensatz zum Stand der Technik werden keine prozessfremden Hilfsstoffe benutzt, die anschließend wieder aus dem Prozess entfernt und entsorgt werden müssen. Ferner zeichnet sich das erfindungsgemäße Verfahren durch apparative Einfachheit und geringen Energiebedarf aus. Ein breites Spektrum von Sterylglycoside enthaltenden Fetten, Ölen oder Spaltfettsäuren kann mit dem erfindungsgemäßen Verfahren zu Biodiesel verarbeitet werden. Alle Speise- und Nichtspeiseöle sind prinzipiell als Einsatzstoffe geeignet. Bevorzugt werden Sojaöl, Palmöl, Palmolein, Rapsöl, Jatrophaöl, Sonnenblumenöl, Algenöl oder Mischungen dieser Öle eingesetzt. Auch Mischungen pflanzlicher Öle mit tierischen Fetten sind einsetzbar.

### Beispiele

Zur Verdeutlichung der Wirtschaftlichkeit und technischen Durchführbarkeit des Verfahrens dienen die folgenden Beispiele, die die Vorteile des erfindungsgemäßen Verfahrens im Vergleich zum Stand der Technik verdeutlichen.

### Beispiel 1: Stand der Technik

Zur kontinuierlichen Herstellung von Biodiesel wurde Palmöl mit einem Massenstrom von 2,5 kg/h sowie Katalysator (Na-Methylat 0,5 Gew.-% bezogen auf Öleinsatzmenge und Methanol mit 1,5-fachem molaren Überschuss zum Öl) der Umesterung zugeführt.

Der Reaktionsteil bestand aus zwei hintereinander geschalteten Rührreaktoren und Flüssig-Flüssig-Phasenabscheidern mit einem Flüssigkeitsvolumen von ca. 3,8 l pro Stufe, um eine Verweilzeit von 90 Minuten für jeden Reaktionsschritt zu gewährleisten. Um eine Rückvermischung bzw. einen Öldurchbruch zu unterbinden, war jeder der Rührreaktoren als dreistufige Rührkesselkaskade ausgeführt. Zum Eintrag der jeweils erforderlichen Reaktionswärme waren die Reaktoren als Doppelmantelglasgefäß ausgeführt und wurden mittels eines Wassergefüllten Thermostaten beheizt. Die Flüssig-Flüssig-Phasenabscheider waren als liegende Glaszylinder mit separatem Abfluss für die leichte Fettsäuremethylester- und die schwere Glycerinphase ausgeführt. Die Einstellung des gewünschten Temperaturprofiles wurde durch eine extern angebrachte elektrische Begleitheizung realisiert. Dem ersten Rührreaktoren wurden 50 % der Katalysator- und Methanolmenge zudosiert, um einen Umesterungsgrad von 80 % bei einer Reaktionstemperatur von 40 bis 65°C zu erreichen, wobei die Reaktion unter Alkohollimitierung ablief. Zum Erreichen des Endumsatzes wurde dem zweiten Rührreaktor Methanol im stöchiometrischen Überschuss zugeführt. Das nicht umgesetzte Methanol und ca. 90% des Katalysators schieden sich mit dem Glycerin aus der Fettsäurealkylesterphase ab. Zur Neutralisation der Katalysatorreste wurde dem Ester mittels Intensivmischer 1 Gew.-% einer 3 %-igen Salzsäure zugesetzt. Der nun saure Rohester wurde nun zur weiteren Aufarbeitung einer im Gegenstrom mit Wasser als Waschmittel betriebenen Waschkolonne zugeführt. Dabei kam es an der Phasengrenzfläche zwischen schwerer Wasserphase und leichter Esterphase zur Ausbildung einer ständig wachsenden Suspensionsschicht, die sich beim weiteren Anwachsen verfestigte und schlammartige Konsistenz annahm. Es kam zur Verstopfung der Waschkolonne, zur Blockierung des Wasserzulaufs und des Ablaufs der Esterphase; die Biodieselherstellung musste daher unterbrochen werden.

### Beispiel 2: Erfindungsgemäßes Verfahren

Es wurde wie in Beispiel 1 vorgegangen, zusätzlich wurden jedoch folgende Maßnahmen ergriffen:
1. Zur Gewährleistung einer unbehinderten Wasserzugabe wurde der Wasserzulauf zur Waschkolonne oberhalb der Füllkörperschicht und unterhalb der Phasengrenzfläche bzw. der Suspensionsschicht positioniert.
2. Der Kolonnenkopf der Waschkolonne wurde mit einem Rührwerk ausgestattet, das mit 30 bis 120 U/min variabel eingestellt werden konnte

Es konnte nun beobachtet werden, dass sich beim Rühren der Suspensionsschicht anhaftendes Wasser von den Schlammpartikeln ablöste und in die schwere Phase abfloss. Ferner war erkennbar, dass sich die Schlammpartikel homogenisierten und mit der Esterphase konstant aus der Waschkolonne ausgetragen wurden. Eine Verstopfung oder Blockierung der Waschkolonne trat nicht auf. Die Schlammpartikel wurden analytisch als Sterylglycosid/Fettsäurealkylester/Wasser-Agglomerate identifiziert. Die Esterphase wurde mit 40 °C warmem Frischwasser (3 Gew.-%) mittels eines Intensivmischers versetzt und anschließend bei gleicher Temperatur einer Zentrifuge zugeführt, in der eine schwere, Wasser enthaltende Schlammphase abgetrennt wurde. Der als leichte Phase der Zentrifugation erhaltene Fettsäuremethylester war klar und wies einen Wassergehalt von ca. 1000 ppm auf. Durch Trocknung konnte hieraus spezifikationsgerechter Biodiesel erhalten werden.

### Bezugszeichenliste

- 1: Leitung
- 2: Wasserleitung
- 3: Waschkolonne
- 4: Abwasserleitung
- 5: Suspensionsphase
- 6: Rührer
- 7: leichte Phase
- 8: Leitung
- 9: Mischer
- 10: Wasserleitung
- 11: Intensivrührer
- 12: Leitung
- 13: Leitung
- 14: Zentrifuge
- 15: Leitung
- 16: Leitung

## Patentansprüche

1. Verfahren zur Herstellung von Biodiesel aus Sterylglycoside enthaltenden Fetten, Ölen oder Spaltfettsäuren, wobei Fette, Öle oder Spaltfettsäuren mit kurzkettigen Alkanolen in Gegenwart eines Katalysators durch Umesterung oder Veresterung zu Fettsäurealkylester umgesetzt werden und man einen an Fettsäurealkylester reichen, ersten Produktstrom als leichte Phase einer Flüssig-Flüssig-Phasentrennung gewinnt,
**dadurch gekennzeichnet, dass** folgende Verfahrensschritte durchgeführt werden:
a) Waschen des ersten Produktstromes in einer Waschvorrichtung mit Wasser,
b) Behandeln der sich bei der Wäsche an der Phasengrenzschicht zwischen der schweren, wasserreichen Phase und der leichten, an Fettsäurealkylester reichen Phase ausbildenden, Sterylglycoside, Fettsäurealkylester und Wasser enthaltenden Suspensionsschicht durch Einbringen kinetischer Energie,
c) Abziehen eines zweiten Produktstromes aus der leichten Phase, der Sterylglycoside in homogen gelöster Form oder in kolloidal gelöster Form oder in Form feindisperser Sterylglycosid/Fettsäurealkylester/Wasser-Agglomerate oder alle Kombinationen davon enthält,
d) Behandeln des zweiten Produktstromes in mindestens einer weiteren Behandlungsstufe, in der er intensiv mit Wasser vermischt wird, wodurch als leichte Phase einer Flüssig-Flüssig-Phasentrennung ein dritter Produktstrom erhalten wird, der Sterylglycosid/FettsäurealkylesterlWasser-Agglomerate enthält, die mittels mechanischer Trennverfahren abscheidbar sind,
e) Zuführen des dritten Produktstromes zu einem mechanischen Trennverfahren,
f) Abziehen eines vierten Produktstromes aus dem mechanischen Trennverfahren als leichte Phase, der anschließend einer Produktkonditionierung zugeführt wird, wobei spezifikationsgemäßer Biodiesel erhalten wird.
g) Abziehen eines fünften, an Sterylglycosiden angereicherten Produktstromes aus dem mechanischen Trennverfahren als schwere Phase.

2. Verfahren nach Anspruch 1, **dadurch gekennzeichnet, dass** die Waschvorrichtung eine Waschkolonne ist, die im Gegenstrom betrieben wird und strukturierte Packungen oder Füllkörper als Trennelemente enthält.

3. Verfahren nach Anspruch 1 oder 2, **dadurch gekennzeichnet, dass** das Einbringen kinetischer Energie durch Rühren erfolgt.

4. Verfahren nach einem der vorhergehenden Ansprüche, **dadurch gekennzeichnet, dass** das mechanische Trennverfahren die Zentrifugation ist.

5. Verfahren nach einem der vorhergehenden Ansprüche, **dadurch gekennzeichnet, dass** die Produktkonditionierung die Trocknung oder die Filtration oder beides umfasst.

6. Verfahren nach einem der vorhergehenden Ansprüche, **dadurch gekennzeichnet, dass** aus dem fünften Produktstrom nach weiterer Aufarbeitung ein Sterylglycoside enthaltender Dickschlamm erhalten wird, der der Entsorgung oder weiteren Verwendung zugeführt wird.

7. Verfahren nach einem der vorhergehenden Ansprüche, **dadurch gekennzeichnet, dass** als Alkanole Methanol oder Ethanol oder beides eingesetzt werden.

8. Anlage zur Herstellung von Biodiesel aus Sterylglycoside enthaltenden Fetten, Ölen oder Spaltfettsäuren, insbesondere zur Durchführung eines Verfahrens nach einem der vorhergehenden Ansprüche,
- mit mindestens einer Reaktionsstufe, in der Sterylglycoside enthaltende Fette, Öle oder Spaltfettsäuren mit kurzkettigen Alkanolen in Gegenwart eines Katalysators durch Umesterung oder Veresterung zu Fettsäurealkylester umgesetzt werden und man als leichte Phase einer Flüssig-Flüssig-Phasentrennung einen an Fettsäurealkylester reichen, ersten Produktstrom gewinnt,
- mit einer Waschkolonne (3), der man den ersten Produktstrom über eine Leitung (1) zuführt und in der er mit Wasser gewaschen wird, wobei man einen zweiten Produktstrom als leichte Phase erhält,
- mit mindestens einem Mischer (9), dem man den zweiten Produktstrom über eine Leitung (8) zuführt und ihn dort intensiv mit Wasser vermischt, wobei man nach Flüssig-Flüssig-Phasentrennung einen dritten Produktstrom als leichte Phase erhält,
- mit einer mechanischen Trennvorrichtung (14), der der dritte Produktstrom über eine Leitung (13) zugeführt wird und aus der man nach Phasentrennung einen vierten Produktstrom als leichte Phase erhält, der über eine Leitung (15) einer Produktkonditionierung zugeführt wird, wobei spezifikationsgemäßer Biodiesel erhalten wird, und aus der man einen fünften, an Steryglycosiden angereicherten Produktstrom als schwere Phase erhält, der über eine Leitung (16) abgezogen wird und nach weiterer Aufarbeitung der Entsorgung oder weiteren Verwendung zugeführt wird.

9. Anlage nach Anspruch 8, **dadurch gekennzeichnet, dass** die Waschkolonne (3) im Gegenstrom betrieben wird und strukturierte Packungen oder Füllkörper als Trennelemente enthält.

10. Anlage nach Anspruch 8 oder 9, **dadurch gekennzeichnet, dass** die mechanische Trennvorrichtung (14) eine Zentrifuge ist.

## Claims

1. A method for producing biodiesel from fats, oils or breakdown fatty acids containing steryl glycosides, wherein fats, oils or breakdown fatty acids are reacted with short-chain alkanols in the presence of a catalyst by transesterification or esterification to obtain fatty acid alkyl ester and a first product stream rich in fatty acid alkyl ester is obtained as light phase of a liquid-liquid phase separation, **characterized in that** the following method steps are performed:
a) washing the first product stream with water in a washing apparatus;
b) treating the suspension layer formed during washing on the phase boundary layer between the heavy phase rich in water and the light phase rich in fatty acid alkyl ester and containing steryl glycosides, fatty acid alkyl ester and water by introducing kinetic energy;
c) withdrawing a second product stream from the light phase, which contains steryl glycosides in homogeneously dissolved form or in colloidally dissolved form or in the form of finely dispersed steryl glycoside/fatty acid alkyl ester/water agglomerates or all combinations thereof;
d) treating the second product stream in at least one further treatment stage in which it is intensively mixed with water, whereby as light phase of a liquid-liquid phase separation a third product stream is obtained, which contains steryl glycoside/fatty acid alkyl ester/water agglomerates which are separable by means of mechanical separation methods;
e) supplying the third product stream to a mechanical separation method;
f) withdrawing a fourth product stream from the mechanical separation method as light phase, which subsequently is supplied to a product conditioning, wherein biodiesel according to specifications is obtained;
g) withdrawing a fifth product stream enriched in steryl glycosides from the mechanical separation method as heavy phase.

2. The method according to claim 1, **characterized in that** the washing apparatus is a washing column which is operated in counterflow and contains structured packings or fillings as separating elements.

3. The method according to claim 1 or 2, **characterized in that** the introduction of kinetic energy is effected by stirring.

4. The method according to any of the preceding claims, **characterized in that** the mechanical separation method is the centrifugation.

5. The method according to any of the preceding claims, **characterized in that** the product conditioning comprises drying or filtration or both.

6. The method according to any of the preceding claims, **characterized in that** after further processing a thickened sludge containing steryl glycosides is obtained from the fifth product stream, which is supplied to the disposal or further use.

7. The method according to any of the preceding claims, **characterized in that** methanol or ethanol or both are used as alkanols.

8. A plant for producing biodiesel from fats, oils or breakdown fatty acids containing steryl glycosides, in particular for carrying out a method according to any of the preceding claims,
- with at least one reaction stage in which fats, oils or breakdown fatty acids containing steryl glycosides are reacted with short-chain alkanols in the presence of a catalyst by transesterification or esterification to obtain fatty acid alkyl ester and as light phase of a liquid-liquid phase separation a first product stream rich in fatty acid alkyl ester is obtained,
- with a washing column (3), to which the first product stream is supplied via a conduit (1) and in which the same is washed with water, wherein a second product stream is obtained as light phase,
- with at least one mixer (9), to which the second product stream is supplied via a conduit (8) and is intensively mixed there with water, wherein after liquid-liquid phase separation a third product stream is obtained as light phase,
- with a mechanical separating device (14) to which the third product stream is supplied via conduit (13) and from which after phase separation a fourth product stream is obtained as light phase, which is supplied to a product conditioning via a conduit (15), wherein biodiesel according to specifications is obtained, and from which a fifth product stream enriched in steryl glycosides is obtained as heavy phase, which is withdrawn via a conduit (16) and after further processing supplied to the disposal or further use.

9. The plant according to claim 8, **characterized in that** the washing column (3) is operated in counterflow and contains structured packings or fillings as separating elements.

10. The plant according to claim 8 or 9, **characterized in that** the mechanical separating device (14) is a centrifuge.

## Revendications

1. Procédé de préparation de biodiesel à partir de matières grasses, d'huiles ou d'acides gras de craquage contenant des stérylglycosides, des matières grasses, des huiles ou des acides gras de craquage étant transformés par des alcanols à chaîne courte en présence d'un catalyseur par transestérification ou par estérification en des esters alcoyliques d'acide gras et on obtient un premier courant de production riche en esters alcoyliques d'acide gras sous la forme d'une phase légère d'une séparation de phases liquide-liquide,
**caractérisé en ce qu'**on effectue les stades de procédé suivantes :
a) on lave le premier courant de produit à l'eau dans un dispositif de lavage,
b) on traite par apport d'énergie cinétique la couche de suspension, se formant au lavage à la couche limite entre la phase lourde riche en eau et la phase légère riche en esters alcoyliques d'acide gras et contenant des stérylglycosides, des esters alcoyliques d'acide gras et de l'eau,
c) on soutire de la phase légère un deuxième courant de production qui contient des stérylglycosides sous une forme dissoute de manière homogène ou sous une forme dissoute de manière colloïdale ou sous la forme de produits agglomérés finement dispersés de stérylglycosides/esters alcoyliques d'acide gras/eau ou de toutes leurs combinaisons,
d) on traite le deuxième courant de produit dans au moins un autre étage de traitement, dans lequel il est mélangé intensivement à de l'eau, en obtenant ainsi, comme phase légère d'une séparation de phases liquide-liquide, un troisième courant de produit, qui contient des produits agglomérés de stérylglycosides/esters alcoyliques d'acide gras/eau, qui peuvent être séparés au moyen d'un procédé de séparation mécanique,
e) on envoie le troisième courant de produit à un procédé de séparation mécanique,
f) on soutire un quatrième courant de produit du procédé de séparation mécanique, en tant que phase légère, que l'on envoie ensuite à un conditionnement de produit en obtenant du biodiesel conforme aux spécifications,
g) on soutire un cinquième courant de produit enrichi en stérylglycosides du procédé de séparation mécanique en tant que phase lourde.

2. Procédé suivant la revendication 1, **caractérisé en ce que** le dispositif de lavage est une colonne de lavage, qui fonctionne à contre courant et qui contient, comme éléments de séparation, des garnissages ou des corps de remplissage structurés.

3. Procédé suivant la revendication 1 ou 2, **caractérisé en ce qu'**on effectue l'apport d'énergie cinétique par brassage.

4. Procédé suivant l'une des revendications précédentes, **caractérisé en ce que** le procédé de séparation mécanique est la centrifugation.

5. Procédé suivant l'une des revendications précédentes, **caractérisé en ce que** le conditionnement de produits comprend le séchage ou la filtration ou les deux.

6. Procédé suivant l'une des revendications précédentes, **caractérisé en ce que** l'on obtient, à partir du cinquième courant de produit, après un retraitement supplémentaire, une boue épaisse qui contient des stérylglycosides et qui est envoyée à la dépollution ou à une autre utilisation.

7. Procédé suivant l'une des revendications précédentes, **caractérisé en ce qu'**on utilise comme alcanols du méthanol ou de l'éthanol ou les deux.

8. Installation de préparation de biodiesel à partir de matières grasses, d'huiles ou d'acides gras de craquage contenant des stérylglycosides, notamment pour effectuer un procédé suivant l'une des revendications précédentes,
- comprenant au moins un étage de réaction, dans lequel des matières grasses, des huiles ou des acides gras de craquage contenant des stérylglycosides sont transformés par des alcanols à chaîne courte en présence d'un catalyseur par transestérification ou par estérification en des esters alcoyliques d'acide gras et l'on obtient, comme phase légère d'une séparation de phases liquide-liquide, un premier courant de produit riche en esters alcoyliques d'acide gras,
- comprenant une colonne (3) de lavage, à laquelle on envoie le premier courant de produit par un conduit (1) et dans laquelle il est lavé par de l'eau, en obtenant un deuxième courant de produit en tant que phase légère,
- comprenant au moins un mélangeur (9) auquel on envoie le deuxième courant de produit par un conduit (8) et où on l'y mélange intensivement à de l'eau, en obtenant, après une séparation de phases liquide-liquide, un troisième courant de produit en tant que phase légère,
- comprenant un dispositif (14) de séparation mécanique, auquel on envoie le troisième courant de produit par un conduit (13) et dont on obtient, après une séparation de phase un quatrième courant de produit en tant que phase légère, que l'on envoie à un conditionnement de produit par un conduit (15), en obtenant du biodiesel conforme aux spécifications et à partir duquel on obtient un cinquième courant de produit enrichi en stérylglycosides comme phase lourde, que l'on soutire par un conduit (16) et que l'on envoie, après un retraitement supplémentaire, à la dépollution ou à une autre utilisation.

9. Installation suivant la revendication 8, **caractérisée en ce que** la colonne (3) de lavage fonctionne à contre courant et contient des garnissages ou des corps de remplissage structurés comme éléments de séparation.

10. Installation suivant la revendication 8, **caractérisée en ce que** le dispositif (14) de séparation mécanique est une centrifugeuse.
